# EUROPÄISCHE PATENTSCHRIFT

(11) **EP 0 800 963 B1**
(45) Veröffentlichungstag und Bekanntmachung des Hinweises auf die Patenterteilung: **11.09.2002**
(21) Anmeldenummer: 97105411.9
(22) Anmeldetag: 01.04.1997
(51) Int. Cl.: B60R 21/26, B60R 21/20

(54) **Gassack**
Air bag
Coussin gonflable

(30) Priorität: 12.04.1996 DE 29606709 U
(43) Veröffentlichungstag der Anmeldung: 15.10.1997
(73) Patentinhaber: TRW Occupant Restraint Systems GmbH & Co. KG, 73551 Alfdorf (DE)
(72) Erfinder: Acker, Dominique, 73553 Alfdorf (DE); Richter, Thomas, 73529 Schwäbisch Gmünd (DE)
(74) Vertreter: Degwert, Hartmut, Dipl.-Phys.

(56) Entgegenhaltungen:
- EP-A- 0 600 598
- EP-A- 0 698 533
- DE-A- 4 442 118
- DE-U- 29 606 724
- US-A- 4 830 401
- US-A- 5 160 164
- RESEARCH DISCLOSURE, Nr. 383, 1.März 1996, Seite 153 XP000581300 "GAS DIFFUSER AND ATTACHMENT FOR PASSENGER AIR BAG MODULE"

## Beschreibung

Die Erfindung betrifft einen Gassack gemäß des Oberbegriffs des Anspruchs 1, wie er für ein Fahrzeuginsassen-Rückhaltesystem verwendet wird. Ein solches Rückhaltesystem besteht im wesentlichen aus einer Vorrichtung, die nach Aktivierung Druckgas bereitstellt, und einem Gassack, der ausgehend von einem zusammengefalteten Ruhezustand mittels des Druckgases entfaltet werden kann, um bei einem Unfall eine Rückhaltewirkung für einen Fahrzeuginsassen bereitzustellen.

Ein gattungsgemäßer Gassack ist in der DE-A 44 42 118 gezeigt. Hier ist ein halbkreisförmiges Gewebeteil über der Einblasöffnung angeordnet und so befestigt, daß ein einseitig offener Strömungskanal gebildet ist, der den Gasstrom um etwa 90° umlenkt.

Auch in der US-A 5 160 164 wird eine Gasumlenkung durch ein Gewebeteil erzielt.

Der Einsatz von Gewebeteilen der verschiedensten Formen ist bekannt, wie etwa aus dem Research Disclosure Nr. 383 vom 1. März 1996, S. 153 (XP 000581300) hervorgeht.

Gewebeteile können auch verwendet werden, um eine Diffusorkammer zu bilden, aus der das Druckgas ohne Richtungsänderung in den Gassack strömt, wie dies in der EP-A 0698 533 gezeigt ist.

Die EP-A 0 600 598 zeigt einen Gassack, bei dem ein im Gasstrom angeordnetes Gewebeteil eingesetzt wird, um die Vorwärtsgeschwindigkeit des Gassacks bei dessen Entfaltung zu verringern.

In der US-A 4 830 401 ist die Verwendung eines Gewebeteils zur Befestigung von Fangbändern gezeigt.

Gemäß der Erfindung ist ein Gassack mit den Merkmalen des Anspruchs 1 geschaffen. Mit einem solchen Strömungskanal kann das Entfalten des Gassacks in vielfältiger Weise an die jeweils vorliegenden Anforderungen angepaßt werden, während gleichzeitig verhindert wird, daß das heiße Druckgas direkt auf die Wandung des Gassacks auftrifft und diesen beschädigt.

Vorteilhafte Ausgestaltungen der Erfindung sind in den Unteransprüchen angegeben.

Die Erfindung wird nachfolgend anhand einer bevorzugten Ausführungsform beschrieben, die in der Zeichnung dargestellt ist. In dieser zeigen:
- Fig. 1 schematisch eine Draufsicht auf einen Teil eines Gassacks gemäß einer bevorzugten Ausführungsform der Erfindung;
- Fig. 2 schematisch einen Querschnitt durch den in Fig. 1 dargestellten Teil des Gassacks;
- Fig. 3 schematische eine perspektivische Ansicht des in Fig. 1 dargestellten Teils des Gassacks.

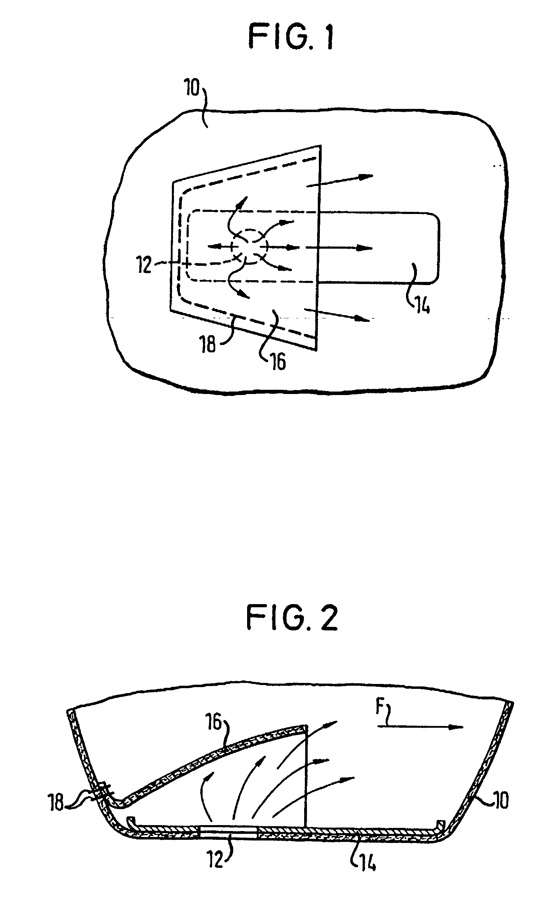

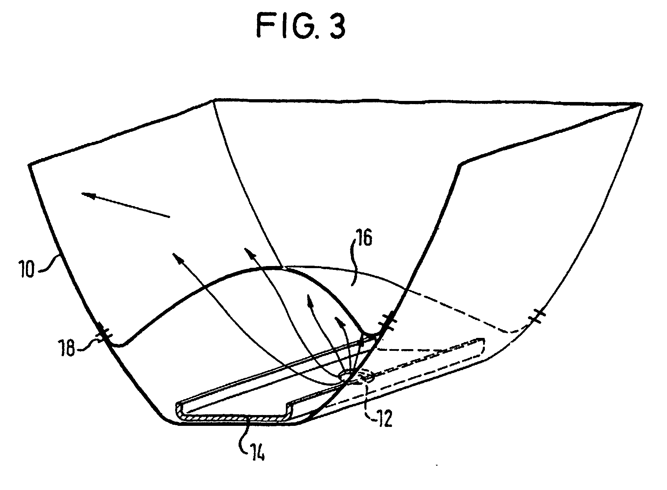

In den Figuren 1 bis 3 ist schematisch und ausschnittsweise ein Gassack gemäß einer bevorzugten Ausführungsform der Erfindung dargestellt. Der Gassack 10 ist mit einer Einblasöffnung 12 sowie einer im Innenraum des Gassacks angeordneten Halteplatte 14 versehen, welche die Einblasöffnung 12 umgibt. Die Halteplatte 14 kann dazu verwendet werden, den Gassack 10 an einer (nicht dargestellten) Vorrichtung zu befestigen, die im Bedarfsfall Druckgas bereitstellt, um den Gassack 10 ausgehend von einer (nicht dargestellten) zusammengefalteten Ruhestellung zu entfalten, so daß der Gassack 10 eine Schutzwirkung für einen Fahrzeuginsassen bereitstellen kann. Eine solche Vorrichtung zum Bereitstellen von Druckgas kann ein Gasgenerator oder ein Druckgasspeicher sein.

Im Innenraum des Gassacks 10 ist ein Gewebeteil 16 angeordnet, das gegenüber der Einblasöffnung 12 liegt und so an der Wandung des Gassacks 10 befestigt ist, daß es zusammen mit einem Teil der Innenfläche des Gassacks 10 einen Strömungskanal für das Druckgas bildet, das durch die Einblasöffnung 12 in den Gassack 10 einströmen kann. Bei der gezeigten Ausführungsform ist das Gewebeteil 16 viereckig, und es ist an drei seiner Längsseiten mit der Wandung des Gassacks 10 durch Nähte 18. Gemäß einer nicht dargestellten Variante könnte auch vorgesehen sein, daß das Gewebeteil 16 die Halteplatte 14 hintergreift.

Durch die Anordnung der Nähte 18 bildet das Gewebeteil 16 zusammen mit der Wandung des Gassacks 10 und der Halteplatte 14 eine Tasche, die einen sich zum Innenraum des Gassacks hin erweiternden Strömungskanal definiert (siehe insbesondere Fig. 2). Das durch die Einblasöffnung 12 in den Gassack 10 einströmende Druckgas wird in diesem Strömungskanal umgelenkt, wobei durch die spezielle Anordnung des Gewebeteils 16 eine durch die Pfeile F symbolisierte Einströmrichtung des Druckgases in den Innenraum des Gassacks 10 erhalten wird, die zu einer kontrollierten Entfaltung des Gassacks 10 beiträgt.

Die Einblasöffnung 12 sowie das Gewebeteil 16 sind außerhalb der Mitte der Halteplatte 14 angeordnet, wobei der Strömungskanal zu der Seite der Halteplatte 14 geöffnet ist, die bezüglich der Mitte der Halteplatte 16 zur Einblasöffnung 12 entgegengesetzt ist. Zusammen mit der durch den Strömungskanal bewirkten Umlenkung des in den Innenraum des Gassacks 10 eintretenden Druckgases bewirkt diese außermittige Anordnung der Einblasöffnung 12, daß die Wandung des Gassacks 10 vor einer direkten Berührung mit dem in den Innenraum des Gassacks 10 eintretenden, heißen und aggressiven Druckgas geschützt ist.

Das Gewebeteil 16 besteht aus einem Gewebe, wie es auch für den Gassack 10 selbst verwendet wird. Je nach Anforderung kann das Gewebeteil einlagig oder mehrlagig sein. Das Gewebeteil 16 beeinträchtigt das Zusammenfalten des Gassacks 10 nicht, da es sich platzsparend zusammenlegen läßt.

Durch die Erfindung ist somit ein einfach zu realisierender Gassack geschaffen, bei dem der Entfaltungsvorgang durch eine geeignete konstruktive Auslegung des Gewebeteils 16 in gewünschter Weise beeinflußt werden kann, wobei das Gewebeteil 16 zusätzlich die Wandung des Gassacks 10 vor einer direkten Berührung mit dem heißen Druckgas schützt, das bei Aktivierung des Gassacks in dessen Innenraum einströmt.

## Patentansprüche

1. Gassack mit einer Einblasöffnung (12) und einem Gewebeteil (16), das im Innenraum des Gassacks (10) gegenüber der Einblasöffnung (12) angeordnet ist und zusammen mit einem Teil der Innenfläche des Gassacks (10) einen Strömungskanal für durch die Einblasöffnung (12) in den Gassack (10) einströmendes Druckgas bildet, wobei im Innenraum des Gassacks (10) eine Halteplatte (14) angeordnet ist, welche die Einblasöffnung (12) umgibt,
**dadurch gekennzeichnet, daß** die Einblasöffnung (12) sowie das Gewebeteil (16) außerhalb der Mitte der Halteplatte (14) angeordnet sind,
wobei der Strömungskanal zu der Seite der Halteplatte (14) geöffnet ist, die bezüglich der Mitte der Halteplatte (14) zur Einblasöffnung (12) entgegengesetzt ist.

2. Gassack nach Anspruch 1, **dadurch gekennzeichnet, daß** das Gewebeteil (16) mit der Wandung des Gassacks (10) vernäht ist.

3. Gassack nach Anspruch 2, **dadurch gekennzeichnet, daß** das Gewebeteil (16) viereckig und an drei seiner Längsseiten mit dem Gassack (10) vernäht ist.

4. Gassack nach einem der vorhergehenden Ansprüche, **dadurch gekennzeichnet, daß** das Gewebeteil (16) die Halteplatte (14) hintergreift.

5. Gassack nach einem der vorhergehenden Ansprüche, **dadurch gekennzeichnet, daß** sich der Strömungskanal zum Innenraum des Gassacks (10) hin erweitert.

6. Gassack nach einem der vorhergehenden Ansprüche, **dadurch gekennzeichnet, daß** das Gewebeteil (16) eine Tasche bildet, die sich beim Einströmen des Druckgases öffnet und die Gasströmung zu ihrem offenen Ende hin umlenkt.

## Claims

1. A gas bag having an inflation opening (12) and a fabric part (16) which is arranged in the interior of the gas bag (10) opposite to the inflation opening (12) and together with a part of the interior surface of the gas bag (10) defines a flow duct for compressed gas entering the gas bag (10) through the inflation opening (12), a holding plate (14) being arranged in the interior of the gas bag (10) and surrounding the inflation opening (12),
**characterized in that** the inflation opening (12) and the fabric part (16) are arranged eccentrically with respect to the middle of the holding plate (14),
the flow duct being open towards that side of the holding plate (14) which, as related to the middle of the holding plate (14), is opposite to the inflation opening (12).

2. The gas bag as claimed in claim 1, **characterized in that** the fabric part (16) is sewn to the wall of the gas bag (10).

3. The gas bag as claimed in claim 2, **characterized in that** the fabric part (16) is four-cornered and is sewn to the gas bag (10) at three of its longitudinal sides.

4. The gas bag as claimed in any one of the preceding claims, **characterized in that** the fabric part (16) reaches behind the holding plate (14).

5. The gas bag as claimed in any one of the preceding claims, **characterized in that** the flow duct widens towards the interior of the gas bag (10).

6. The gas bag as claimed in any one of the preceding claims, **characterized in that** the fabric part (16) forms a pocket which opens during inflow of the compressed gas and deflects the gas flow towards its open end.

## Revendications

1. Coussin à gaz pourvu d'un orifice de gonflage (12) et d'une partie tissée (16) qui est disposée dans la cavité intérieure du coussin à gaz (10) en face de l'orifice de gonflage (12) et qui forme, conjointement avec une partie de la surface intérieure du coussin à gaz (10), un canal d'écoulement pour le gaz comprimé qui pénètre dans le coussin à gaz (10) par l'orifice de gonflage (12), une plaque de retenue (14) qui entoure l'orifice de gonflage (12) étant disposée dans la cavité intérieure du coussin à gaz (10),
**caractérisé en ce que** l'orifice de gonflage (12) ainsi que la partie tissée (16) sont agencés de manière excentrée par rapport à la plaque de retenue (14),
le canal d'écoulement étant ouvert vers le côté de la plaque de retenue (14) qui est situé à l'opposé de l'orifice de gonflage (12), par rapport au centre de la plaque de retenue (14).

2. Coussin à gaz selon la revendication 1, **caractérisé en ce que** la partie tissée (16) est cousue avec la paroi du coussin à gaz (10).

3. Coussin à gaz selon la revendication 2, **caractérisé en ce que** la partie tissée (16) est rectangulaire et cousue avec le coussin à gaz (10) sur trois de ses côtés longitudinaux.

4. Coussin à gaz selon la revendication 4, **caractérisé en ce que** la partie tissée (16) passe derrière la plaque de retenue (14).

5. Coussin à gaz selon l'une des revendications précédentes, **caractérisé en ce que** le canal d'écoulement s'élargit en direction de la cavité intérieure du coussin à gaz (10).

6. Coussin à gaz selon l'une des revendications précédentes, **caractérisé en ce que** la partie tissée (16) forme une poche qui s'ouvre lors de l'arrivée du gaz comprimé et qui dévie l'écoulement de gaz vers son extrémité ouverte.
